# EUROPEAN PATENT SPECIFICATION

(11) **EP 1 878 204 B1**
(45) Date of publication and mention of the grant of the patent: **11.02.2009**
(21) Application number: 05744796.3
(22) Date of filing: 06.05.2005
(51) Int. Cl.: H04L 29/12, H04L 29/06

(54) **ARRANGEMENTS IN IP MULTIMEDIA SUBSYSTEM (IMS)**
ANORDNUNGEN IN EINEM IP-MULTIMEDIA-SUBSYSTEM (IMS)
AGENCEMENTS DANS UN SOUS-SYSTEME MULTIMEDIA IP (IMS)

(43) Date of publication of application: 16.01.2008
(73) Proprietor: Telefonaktiebolaget LM Ericsson (publ), 164 83 Stockholm (SE)
(72) Inventor: DAHLIN, Steinar, S-175 52 JÄRFÄLLA (SE); SKOG, Robert, S-165 76 HÄSSELBY (SE); OLSSON, Ulf, S-192 77 SOLLENTUNA (SE)
(74) Representative: Norin, Klas
(86) International application number: PCT/SE2005/000662
(87) International publication number: WO 2006/121373

(56) References cited:
- WO-A-20/04006534
- US-A1- 2002 165 969
- US-A1- 2004 192 364
- US-A1- 2004 249 951

## Description

### Field of the invention

The present invention relates to arrangements for person-to-person media exchange in IP multimedia Subsystem (IMS) in a communications network. In particular, the present invention relates to arrangements for managing subscriber identities in the IMS.

### Background

Today there exist two competing technology environments for person-to-person media exchange including voice telephony. These are the SIP based technology and the Peer-to-Peer technology. The SIP based technology environments are represented by the IP Multimedia Subsystem standard created in 3GPP and 3GPP2 and other Voice over IP (VoIP) solutions while the Skype and other similar solutions represent the Peer-to-Peer technology.

In the Peer-to-Peer technology the users select any user identity and register themselves as active in any of the super nodes deployed in the network. A super node is a node that connects to more nodes than a regular node, which results in more search propagation through that super node. A check is performed ensuring that the selected identity is unique across the entire network. Calling parties having just a vague idea of the identifier of the user to be called may search across all users and get a list of possible users to select from.

The present invention relates however to arrangements based on the SIP based technology implemented in IMS.

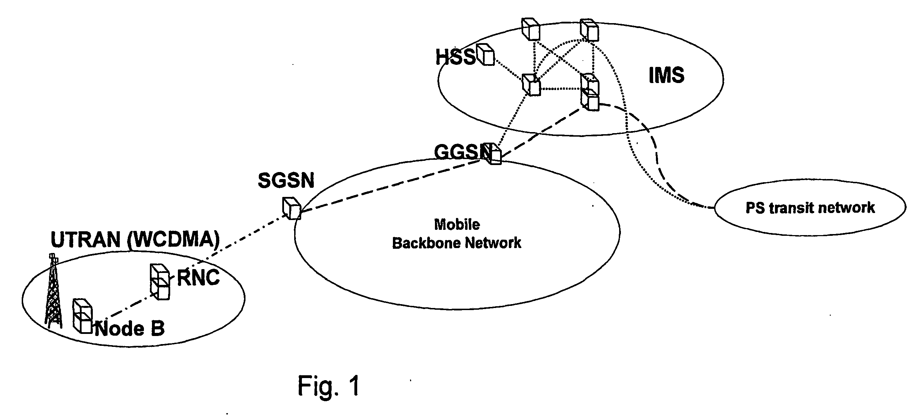

The IP Multi-Media Subsystem (IMS) is an IP multimedia and telephony core network. It is defined by 3GPP and 3GPP2 standards and organizations based on IETF Internet protocols. IMS is access independent as it supports IP to IP sessions over wireline IP and packet data along with GSM/EDGE/UMTS and other wireless packet data applications. **Figure 1** schematically shows IMS connected to a UMTS. It should be noted that only the packet switched part of the UMTS is shown. IMS is connected to the UMTS network via the Gateway GPRS Support Node (GGSN). The IMS may also be connected to further networks as the PS transit network as illustrated in **figure 1****.** IMS comprises of session control, connection control and an applications services framework along with subscriber and services data. It enables the operators to offer multimedia services based on and built upon Internet applications, services and protocols. These protocols include SIP, which is used to manage the IP multimedia sessions. The operation of IMS requires a list of the SIP identities, i.e. the SIP URIs of the registered users.

The Session Initiation Protocol (SIP) is an application layer control signalling protocol for VoIP implementations. A SIP address is a Uniform Resource Identifier (URI). Thus the SIP URI is a unique name given to a SIP device and a SIP address can be embedded in Web pages and can therefore e.g. be integrated as part of Click to talk implementations. SIP transparently supports name mapping and redirection services, allowing the implementation of ISDN and Intelligent Network telephony subscriber services. These facilities also enable personal mobility which is based on the use of the SIP URI. Calling parties and called parties are identified by SIP addresses. The SIP URI comprises an individual part and a network domain part. The network domain part directs, through DNS lookup, any connect attempt towards the SIP URI to the organization responsible for the network domain. When making a SIP call, the calling party first locates by means of the network part the appropriate network, which then sends a SIP request to the called party by using the individual part of the address. The most common SIP operation is the invitation. Instead of directly reaching the intended called party, a SIP request may be redirected or may trigger a chain of new SIP requests by proxies. Users can register their location(s) with SIP servers. This implies that the connecting party must know the SIP URI as a whole for the party to be connected to beforehand. Thus, the calling party has to know the network part and the individual part of the SIP address.

The peer-to-peer solution is provided by a homogeneous provider providing a homogeneous user and identity management in contrast to the SIP solution that is created for a provider structure similar to the traditional telecommunication having a set of co-operating and competing providers. The co-operation of the providers concerns essentially the delivery of a multimedia connection from one subscriber of a first provider to another subscriber of a second provider.

Thus the peer-to-peer solution makes it easy for a peer-to-peer provider to check that selected identities are unique and to provide search mechanisms over all identities. In the SIP solution, all SIP identities has the individual part in addition to the network part which is a result of that each SIP provider has its own domain identity. Thus each SIP provider is only required to check the uniqueness within its own domain. This implies that the SIP solution is not adapted for implementation of search mechanisms and other functions extending over a plurality of domains. Currently, there exist no standards for such interaction between different providers.

In order for a user X to reach a user Y within a SIP technology environment, two steps have to be performed: Firstly, the user Y having a pre-defined SIP URI is required to be made reachable at the domain responsible organization. Secondly, the user X who wants to connect to the SIP URI of the user Y needs to know both an individual part and the network domain part, together forming the SIP URI beforehand.

Thus, it would be desirable to be able to perform the steps above in IMS in a way such that the calling party is not required to know the SIP URI of the called party in advance.

Document US 2004/0249651 describes a directory based service in which a calling party can establish a session by only supplying a partial SIP-URI.

### Summary

The objective problem is to provide arrangements in IMS that handles user identities in a way such that the calling party is not required to know the SIP URI of the called party in advance.

The objective problem is solved by the arrangements having the features of claim 1.

Firstly, the objective problem is solved by the Directory Content Manager in the IMS system provided with capabilities for self-provisioning which makes it possible for the user to select an identifier he wants to be reached by. The selected identifier is stored in a Directory Content Manager.

Secondly, the objective problem is solved by a Directory Search Engine in the IMS system provided with capabilities for searching through all IMS users regardless of their operator relation. Free form searching through the complete set of user identifiers is possible, which returns complete and accurate URI's.

In accordance with the present invention an arrangement is provided that comprises a database adapted to store and publish at least one identifier selected by the user, wherein the database is accessible to a content manager, adapted to associate the at least one selected identifier with the SIP URI of the user. The invention further comprises a search engine, adapted to search for a SIP URI in the database via the associated published selected identifier and to act as an interface between different SIP provider domains wherein the database further arranged to forward a search request to other operators. The arrangement makes it possible to handle user identities in a way such that the calling party is not required to know the SIP URI of the called party in advance.

An advantage with the present invention is that the user identity is not dependent on the operator.

A further advantage with the present invention is that a user himself is allowed to choose the identity that he wants to be reached by.

A further advantage with the present invention is that a free text search of a user is possible.

A further advantage of the present invention is that the search mechanism is able to find users subscribing to the IMS regardless if they are active (i.e. logged on) or not.

### Drawings

**Figure 1** shows schematically the connection of IMS, wherein the present invention may be implemented, to a Universal Mobile Telecommunication System.

**Figure 2** shows schematically the interaction between the database, the content manager and the search engine of the present invention.

### Detailed description of the invention

In order to avoid the disadvantage of prior art that the SIP URI of the called party must be known, the present invention provides arrangements for allowing the user in a self-provisioning manner to select at least one identifier that he wants to be reached by. The at least one identifier may be the name of the user, or an alias, or key words indicating a geographical location, a particular hobby or the favorite soccer team of the user. The arrangements of the present invention provide means for associating each selected identifier with the SIP URI of the user. Moreover, the selected identifiers are then searchable by the users.

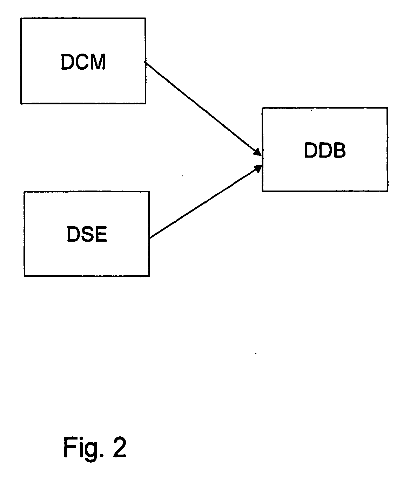

This self-provisioning manner to select identities can be achieved thanks to that the arrangements of the invention provides means for defining interfaces between different providers and their domains. Hence, the arrangements of the present invention, illustrated in **figure 2****,** comprises a database, denoted as a Directory Database (DDB), a content manager denoted as a Directory Content Manager (DCM) and a search engine denoted as a Directory Search Engine (DSE). The arrangements are adapted to be employed in a SIP domain of a provider. Preferably, a SIP domain comprises a DDB, a DCM and a DSE, wherein the DDB is accessible to the DCM and the DSE.

The DDB is adapted to store the identities selected by the users, the SIP URIs, and associations between selected identities and SIP URIs.

The DCM is a processor e.g. adapted to request storing of the selected identities and an association between the selected identities and the SIP URIs in the DDB.

The DSE is a search engine adapted to search in an associated DDB. The DSE is also able to forward a search request to other DDBs of other providers, via the DSE of the other providers, i.e. the DSE is adapted to act as an interface between different provider domains. Thus, the DSE is a conventional search engine equipped with additional logic.

The DDB, DCM and the DSE are preferably located in a single node, but the DDB, DCM and the DSE may also be distributed in separate nodes within a SIP domain. In a preferred embodiment of the present invention, at least one of the DDB, the DCM and the DSE is co-located with the Home Subscriber Server (HSS).

### Provisioning procedure

The user has a relation to the operator that provides him with basic cellular services e.g. in association with a UMTS network. This relation contains the users true identity e.g. in the form of firstname.surname@operator.com. The user may decide to subscribe to the IMS services provided by his operator. Such an subscription may imply access to multimedia communications, instant messaging, presence, gambling etc.

The user accesses the arrangements of the present invention preferably through a web interface. The preferences of the user may be manipulated by using the standardized HTTP-based Ut interface in case the IMS presence server is used as the basis for implementation of the functionalities of the DCM.

The DCM is arranged to review identifiers automatically provided by the IMS standard provisioning, i.e. at least a text based and a phone-number based URI.

In order to avoid the requirement that the SIP URI of the called party must be known, the user may select at least one identity that he wants to be reached by.The DDB is arranged to store the at least one identifier selected by the user.

According to one embodiment of the present invention, the DCM is arranged to check that the selected identifier is unique across the users of that operator, otherwise reselection may be requested or possibly just recommended.

According to a further embodiment of the present invention the DCM is arranged to generate internal identifiers with alternative spellings e.g. for selected identifiers that are, or derived from proper names, in order to handle languages where multiple spellings of the same name are common. The DCM may also be able to handle use of different terms having the same meaning. I.e. searches for mobile station, user equipment, cellular phone etc. may all render the same result as the intrinsic meaning is the same.

According to a further embodiment of the present invention the DCM is arranged to create at least one alias associated with at least one selected identifier as desired by the user, wherein the at least one created alias is stored and published in the DDB.

The DCM is moreover, according to one embodiment of the invention, arranged to communicate to the user that the true identity of said user may be revealed to other users. If that is not acceptable for the user, the DCM may generate private or anonym identifiers to be associated with the SIP URI.

The operator may preferably update his user database accordingly. The searchable directory, DDB is arranged to publish the selected identities. If the operator is connected to an IMS transit operator, the transit directory is updated. That implies that a transit operator conveying traffic but owing no customers has a DBE and a DSE but is not required to have a DCM.

When the selected identity of the user is published in the searchable directory, DDB, the user is reachable to other user of the IMS independently of the domain of the user.

### Search procedure

The search procedure according to preferred embodiments of the invention is illustrated by the scenario where the user X wants to reach a user Y. The search procedure is controlled by the DSE.

The user X only knows the name or a part of a name, or possibly another useful text fragment associated to the user Y. The user X does not know the SIP identifier or the domain responsible for the subscription of the user Y.

By using the present invention, the user X may access his operator's IMS user search engine and give the search key(s) for the user Y and ask for the SIP URI of that user.

First, the DSE controls the search such that the user directory of the own operator is searched. A variety of search mechanisms may be used to implement this, including both classical database technology and web search engine-style free text based searches over the entire data set.

The DSE is arranged to search for the user in waves, according to a preferred embodiment of the present invention. Thus, if there is no local hit at the provider of the user X, the DSE may forward the search request to DSEs of all other providers in the immediate geographical area, since the DSE is adapted to act as an interface between providers of different SIP domains. The DSE may add to the search request a list of operators that already have been contacted, to avoid requests coming from multiple directions which results in that the search tree is limited. Alternatively, the DSE of the originating domain may create a unique search identifier, so a receiving network can recognize search requests and discard copies of identical search requests. The search may be controlled by means of an administrative configuration of the DSE that may depend upon from where the request origins.

If there is no hit in the immediate area, the request is forwarded by the DSE to a transit operator if applicable. A domain that receives a request and is not able to resolve it, forwards the request to connecting domains that have not previously been contacted by e.g. using the list or the unique search identifier as described above. Note that this applies also to a transit operator connected to other transit operators, i.e. the way GPRS relies on a number of interconnected GRX networks. The GRX network is a network that interconnects GPRS networks of different operators in a secure, protected and controlled way.

The search process is repeated until all operators also referred to as providers, including all Mobile Virtual Network Operators (MVNO) are searched. An MVNO is an operator that own customers but has not an own access network. The requestor (i.e. the user X in this case) may set limits on how far the requester wants the request to spread. Also, a receiving domain may choose to send a validation request back before launching a search. In order to obtain a faster search in the cases when the user X already knows the domain, or another property of the user Y, the search engine may comprise means for implementing an extended syntax in order to inform the search engine of which attributes to search in. I.e. it may be possible to only search for users in a specific country, or users belonging to a specific provider. Further, the search engine may choose the networks to search in when the country is known, wherein this feature also may be applied to other parameters which is obvious for a man skilled in the art.

The hits of the search are forwarded to the home network of user X by the DSE.

The returned output data, i.e. the hits resulting from the search, comprises information that makes it possible for the user X to judge whether the user that is searched for is found or not. The type of information in the returned data depends on what the users of the searchable directory wish to publish. Examples of such information are home address, telephone number, etc. The input data entered into the search mechanism may be of the same type.

The returned data can be structured as e.g. business cards (vCards), to enable automatic interpretation in a client such as a cellular phone permitting automatic inclusion in a phone book, for instance.

The hits returned include at least the SIP URI's associated with the information that makes it possible to judge whether the user that is searched for is found or not. The SIP URI of the user (user Y in the example) that is searched for can now be used to create the session INVITE signal, which initiates a call to the user Y.

In order to provide this search mechanism the operators, including any present transit operators, are required to have a standardized search request/response interface between their DSEs. This interface and capability may be a part of the operators IMS interconnect agreement. By using the DSE of the present invention, searches may be performed in administratively controlled waves reaching further and further away until all operators including MVNOs are covered.

According to one embodiment of the present invention, a single DSE is adapted to be used for a plurality of DDBs and/or DCMs, e.g. located in a plurality of networks. Thus one DSE node may act as a central DSE node and is able to search SIP URIs in a GRX community comprising a plurality operator networks. Initially, the DSE node searches the entire GRX community in order to index the GRX community according to SIP URIs in order to be able to give faster responses on subsequent requests.
The IMS, wherein the present invention is adapted to be implemented is connected to a packet switched network. The packet switched network is in one preferred embodiment a Universal Mobile Telecommunication System (UMTS).

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. Arrangement adapted for implementation in a Session Initiated Protocol, SIP, operator domain in IP multimedia Subsystem, IMS, for managing SIP user identities wherein each SIP user is identified by a SIP URI, the arrangement comprises a database (DDB) adapted to stores and publish at least one identifier selected by the user, wherein the database, (DDB) is accessible to a content manager (DCM), adapted to associate the at least one selected identifier with the SIP URI. of the user, and **characterised in that** it comprises a search engine (DSE), adapted to search for a SIP URI in the database (DDB) via the associated published selected identifier and adapted to act as an interface between different SIP operator domains and adapted to forward a search request to search engines of other operators.

2. Arrangement according to any of previous claim **characterised in that** it is adapted to be accessed by the user via a web interface.

3. Arrangement according to any of previous claims, **characterised in that** the content manager (DCM) is arranged to check that the selected identifier is unique across the users of an operator.

4. Arrangement according to any of previous claims, **characterised in that** the content manager (DCM) is arranged to generate at least one internal identifier with alternative spelling associated with the selected identifier.

5. Arrangement according to any of previous claims, **characterised in that** the content manager (DCM) is arranged to create at least one alias associated with at least one selected identifier as desired by the user, wherein the at least one created alias is stored and published in the database (DDB).

6. Arrangement according to any of previous claims, **characterised in that** the content manager (DCM) is arranged to communicate to the user that the SIP URI of said user may be revealed to other users.

7. Arrangement according to claim 6, **characterised in that** the content manager (DCM) is arranged to generate private or anonym identifiers to be associated with the SIP URI of the user.

8. Arrangement according to any of previous claims, **characterised in that** the search engine (DSE) is arranged to search for a user in waves such that a search request is sent to the own operator first, and the search engine (DSE) is subsequently arranged to forward the search request to other operators.

9. Arrangement according to claim 8, **characterised in that** the search engine (DSE) is arranged to add a list comprising operators that already have been contacted to the search request.

10. Arrangement according to claim 8, **characterised in that** the content manager is arranged to create a unique identifier so that a receiving network can recognize search requests.

11. Arrangement according to any of previous claims, **characterised in that** at least one of the database (DDB), content manager (DCM) and the search engine (DSE) is located in a separate node.

12. arrangement according to any of previous claims, **characterised in that** at least one of the database (DDB), content manager (DCM) and the search engine (DSE) is co-located with a Home Subscriber Server (HSS).

13. Arrangement according to any of previous claims, **characterised in that** one single search engine (DSE) is adapted to be used for a plurality of databases (DDBs) and/or a plurality of content manager (DCMs).

14. Arrangement according to any of previous claims, **characterised in that** it is implemented in a Universal Mobile Telecommunication System.

## Patentansprüche

1. Anordnung, angepasst für Implementierung in einer Operatordomäne eines sitzungsinitiierten Protokolls, SIP, in einem IP-Multimedia-Subsystem, IMS, zum Verwalten von SIP-Benutzerkennungen, wobei der SIP-Benutzer durch einen SIP URI identifiziert wird, wobei die Anordnung eine Datenbank (DDB) umfasst, die angepasst ist, um mindestens eine von dem Benutzer ausgewählte Kennung zu speichern und zu veröffentlichen, wobei die Datenbank (DDB) für einen Inhaltsmanager (DCM) zugänglich ist, der angepasst ist, um die mindestens eine ausgewählte Kennung mit dem SIP URI des Benutzers zu assoziieren, und **dadurch gekennzeichnet, dass** sie eine Suchmaschine (DSE) umfasst, die angepasst ist, um nach einem SIP URI in der Datenbank (DDB) über die assoziierte veröffentlichte Kennung zu suchen, und angepasst ist, um als eine Schnittstelle zwischen verschiedenen SIP-Operatordomänen zu fungieren, und angepasst ist, um eine Suchanforderung an Suchmaschinen anderer Operatoren weiterzuleiten.

2. Anordnung nach einem der vorstehenden Ansprüche, **dadurch gekennzeichnet, dass** sie angepasst ist, um von dem Benutzer über eine Webschnittstelle zugänglich zu sein.

3. Anordnung nach einem der vorstehenden Ansprüche, **dadurch gekennzeichnet, dass** der Inhaltsmanager (DCM) angeordnet ist, um zu prüfen, dass die ausgewählte Kennung unter den Benutzern eines Operators eindeutig ist.

4. Anordnung nach einem der vorstehenden Ansprüche, **dadurch gekennzeichnet, dass** der Inhaltsmanager (DCM) angeordnet ist, um mindestens eine interne Kennung mit alternativer Schreibung, die mit der ausgewählten Kennung assoziiert ist, zu erzeugen.

5. Anordnung nach einem der vorstehenden Ansprüche, **dadurch gekennzeichnet, dass** der Inhaltsmanager (DCM) angeordnet ist, um mindestens einen Alias zu erzeugen, der mit mindestens einer ausgewählten Kennung nach Wunsch des Benutzers assoziiert ist, wobei der mindestens eine erzeugte Alias in der Datenbank (DDB) gespeichert und veröffentlicht wird.

6. Anordnung nach einem der vorstehenden Ansprüche, **dadurch gekennzeichnet, dass** der Inhaltsmanager (DCM) angeordnet ist, um dem Benutzer zu kommunizieren, dass der SIP URI des Benutzers anderen Benutzern aufgedeckt werden kann.

7. Anordnung nach Anspruch 6, **dadurch gekennzeichnet, dass** der Inhaltsmanager (DCM) angeordnet ist, um private oder anonyme Kennungen zu erzeugen, die mit dem SIP URI des Benutzers zu assoziieren sind.

8. Anordnung nach einem der vorstehenden Ansprüche, **dadurch gekennzeichnet, dass** die Suchmaschine (DSE) angeordnet ist, um nach einem Benutzer in Wellen derart zu suchen, dass eine Suchanforderung zuerst an den eigenen Operator gesandt wird und die Suchmaschine (DSE) anschließend angeordnet ist, um die Suchanforderung an andere Operatoren weiterzuleiten.

9. Anordnung nach Anspruch 8, **dadurch gekennzeichnet, dass** die Suchmaschine (DSE) angeordnet ist, um eine Liste hinzuzufügen, die Operatoren umfasst, die bereits mit der Suchanforderung kontaktiert wurden.

10. Anordnung nach Anspruch 8, **dadurch gekennzeichnet, dass** der Inhaltsmanager angeordnet ist, um eine eindeutige Kennung zu erzeugen, so dass ein empfangendes Netz Suchanforderungen erkennen kann.

11. Anordnung nach einem der vorstehenden Ansprüche, **dadurch gekennzeichnet, dass** mindestens einer der Datenbank (DDB), des Inhaltsmanagers (DCM) und der Suchmaschine (DSE) in einem separaten Knoten angeordnet ist.

12. Anordnung nach einem der vorstehenden Ansprüche, **dadurch gekennzeichnet, dass** mindestens einer der Datenbank (DDB), des Inhaltsmanagers (DCM) und der Suchmaschine (DSE) ortsgleich mit einem Heimatteilnehmerserver (HSS) angeordnet ist.

13. Anordnung nach einem der vorstehenden Ansprüche, **dadurch gekennzeichnet, dass** eine einzelne Suchmaschine (DSE) angepasst ist, um für eine Vielzahl von Datenbanken (DDB) und/oder eine Vielzahl von Inhaltsmanagern (DCM) verwendet zu werden.

14. Anordnung nach einem der vorstehenden Ansprüche, **dadurch gekennzeichnet, dass** sie in einem universellen Mobilfunk-Telekommunikationssystem implementiert ist.

## Revendications

1. Agencement adapté pour l'implémentation, dans un Protocole Ouvert de Gestion de Session, SIP, d'un Sous-système multimédia IP, IMS, pour gérer des identités d'utilisateur de SIP, dans lequel chaque utilisateur de SIP est identifié par un URI de SIP, l'agencement comprenant une base de données (DDB) adaptée pour stocker et publier au moins un identifiant choisi par l'utilisateur, dans lequel la base de données (DDB) est accessible à un gestionnaire de contenu (DCM), adapté pour associer l'au moins un identifiant choisi avec l'URI de SIP de l'utilisateur, **caractérisé en ce qu'**il comprend un moteur de recherche (DSE), adapté pour rechercher un URI de SIP dans la base de données (DDB) via l'identifiant choisi publié associé et adapté pour servir d'interface entre différents domaines d'opérateur SIP et adapté pour renvoyer une requête de recherche sur des moteurs de recherche d'autres opérateurs.

2. Agencement selon l'une quelconque des revendications précédentes, **caractérisé en ce qu'**il est adapté pour être accédé par l'utilisateur via une interface web.

3. Agencement selon l'une quelconque des revendications précédentes, **caractérisé en ce que** le gestionnaire de contenu (DCM) est agencé pour vérifier que l'identifiant choisi est unique parmi tous les utilisateurs d'un opérateur.

4. Agencement selon l'une quelconque des revendications précédentes, **caractérisé en ce que** le gestionnaire de contenu (DCM) est agencé pour générer au moins un identifiant interne avec une orthographe alternative associée à l'identifiant choisi.

5. Agencement selon l'une quelconque des revendications précédentes, **caractérisé en ce que** le gestionnaire de contenu (DCM) est agencé pour créer au moins un alias associé à au moins un identifiant choisi tel que souhaité par l'utilisateur, dans lequel l'au moins un alias créé est stocké et publié dans la base de données (DDB).

6. Agencement selon l'une quelconque des revendications précédentes, **caractérisé en ce que** le gestionnaire de contenu (DCM) est agencé pour communiquer à l'utilisateur que l'URI de SIP dudit utilisateur peut être révélé aux autres utilisateurs.

7. Agencement selon la revendication 6, **caractérisé en ce que** le gestionnaire de contenu (DCM) est agencé pour générer des identifiants privés ou anonymes qui doivent être associés à l'URI de SIP de l'utilisateur.

8. Agencement selon l'une quelconque des revendications précédentes, **caractérisé en ce que** le moteur de recherche (DSE) est agencé pour rechercher un utilisateur dans des ondes de telle sorte qu'une requête de recherche soit envoyée au propre opérateur en premier, et le moteur de recherche (DSE) est en conséquence agencé pour renvoyer la requête de recherche aux autres opérateurs.

9. Agencement selon la revendication 8, **caractérisé en ce que** le moteur de recherche (DSE) est agencé pour ajouter une liste comprenant des opérateurs qui ont déjà été contactés à la requête de recherche.

10. Agencement selon la revendication 8, **caractérisé en ce que** le gestionnaire de contenu est agencé pour créer un unique identifiant de telle sorte qu'un réseau en réception puisse reconnaître des requêtes de recherche.

11. Agencement selon l'une quelconque des revendications précédentes, **caractérisé en ce qu'**au moins un élément pris parmi la base de données (DDB), le gestionnaire de contenu (DCM) et le moteur de recherche (DSE) est situé dans un noeud séparé.

12. Agencement selon l'une quelconque des revendications précédentes, **caractérisé en ce qu'**au moins un élément pris parmi la base de données (DDB), le gestionnaire de contenu (DCM) et le moteur de recherche (DSE) est co-situé avec un Serveur d'Abonnés Domestiques (HSS).

13. Agencement selon l'une quelconque des revendications précédentes, **caractérisé en ce qu'**un unique moteur de recherche (DSE) est adapté pour être utilisé pour une pluralité de bases de données (DDBs) et/ou une pluralité de gestionnaires de contenu (DCMs).

14. Agencement selon l'une quelconque des revendications précédentes, **caractérisé en ce qu'**il est implémenté dans un Système de Télécommunication Mobile Universel.
